# EUROPEAN PATENT APPLICATION

(11) **EP 1 575 277 A1**
(43) Date of publication of application: **14.09.2005**
(21) Application number: 05101753.1
(22) Date of filing: 07.03.2005
(51) Int. Cl.: H04N 5/225, G03B 19/07, G03B 17/02

(54) **Camcorder**

(30) Priority: 10.03.2004 KR 2004016055
(71) Applicant: SAMSUNG ELECTRONICS CO., LTD., Gyeonggi-Do 442-742 (KR)
(72) Inventor: Kim, Kuie-sup 132-204, Hwanggol-maeul, Suwon-si Gyeonggi-do (KR)
(74) Representative: Geary, Stuart Lloyd

(57) **Abstract**

A combination camera and a DSC lens control method using the same, comprising a lens position check unit for checking a position of a DSC lens if electric power is applied, and a switching unit for switching the DSC lens to a closed state if the lens position check unit decides that the DSC lens is open. Thus, if the power is applied in the DVC mode after the combination camera is turned off when the DSC lens has been open, the combination camera can efficiently switch the DSC lens to the closed state to thereby eliminate a user's inconvenience of using the DVC picture-taking mode during the open state of the DSC lens, or the inconvenience of switching the mode to the DSC image-capturing mode to close the DSC lens and then switching the mode to the DVC picture-capturing mode for use.

## Description

The present invention relates to a camera apparatus having a still camera image capture unit and a camcorder image capture unit.

A digital still camera (DSC) converts an image focused through a lens into a digital signal, and stores the digital signal in a recording medium such as a hard disc, a memory card, or other such device rather than recording the image on a film. The recorded digital signal is then capable of being directly sent to a PC without being scanned. In particular, the DSC is compatible with a personal computer thereby facilitating the editing and manipulation of the transferred image. Further, the DSC has a structure which is similar to a more traditional film camera so users can easily carry the DSC with himself or herself. Such a DSC typically has a lens unit, a memory unit, a signal conversion unit, a display unit, and so forth, and is primarily used to capture still images because of the limited capacity of the recording medium for storing images. The DSC does have a function allowing the capture of moving pictures for a length of time. However, because of the limited storage capacity, this is a short length of time. In order to overcome this drawback of the DSC, the digital video camera (DVC) is more widely used for capturing moving images onto a recording medium such as a magnetic tape or a hard disc, and playing back the captured moving pictures.

The DVC typically has a lens unit, a signal conversion unit, a deck unit for recording and playing back captured moving images, a display unit, and so forth. Further, the DVC has a microphone unit and a speaker unit, and can record moving images in the built-in recording medium for over one hour. However, the DVC can also be used to capture still images, but the captured still images are of a lower quality than ones taken with the DSC. Accordingly, the DVC is primarily used to capture moving images. Further, since the DVC has more functions and a more complicated structure than the DSC, the DVC is usually larger in size and higher in price.

Thus, users currently have to purchase both products to use the respective functions of the DSC and DVC as stated above. This requires consumers to spend more money as well as creating the inconvenience that consumer have to carry both products to use all of the features of both the DSC and DVC.

In order to overcome such problems, the DuoCam, which is a device combining the DSC with the DVC, has been developed and is referred to as 'digital camera/camcorder', 'combination camera', or the like.

However, the above combination camera needs to separately close the DSC lens, since, if the electric power of the combination camera is switched from the DSC to the DVC, the DSC lens will be left open even though the combination camera is operating using the DVC.

Accordingly, a need exists for a control method which closes a DSC lens if electric power to the DSC is switched off when the DSC lens is open.

The present invention has been developed in order to address the above drawbacks and other problems associated with the known arrangement.

The present invention relates to a camera apparatus having a still camera image capture unit and a camcorder image capture unit.

A camera apparatus according to the present invention is characterised by means for blocking the light path from the light sensor in the still camera image capture unit when the still image capture unit is non-operational.

Additional preferred and optional features are set forth in claims 2 and 3 appended hereto.

An embodiment of the present invention will now be described, by way of example only, and with reference to the accompanying drawings, in which:
Figure 1 is a block diagram for showing a combination camera according to an embodiment of the present invention;
Figure 2 is a flow chart for showing a DSC lens control method for the combination camera of Figure 1;
Figure 3 is a block diagram for showing a combination camera according to another embodiment of the present invention; and
Figure 4 is a flow chart for showing a DSC lens control method for the combination camera of Figure 3.

Throughout the drawings, like reference numerals will be understood to refer to like parts, components and structures. Also, functions or constructions well known to those skilled in the art are omitted for clarity and conciseness.

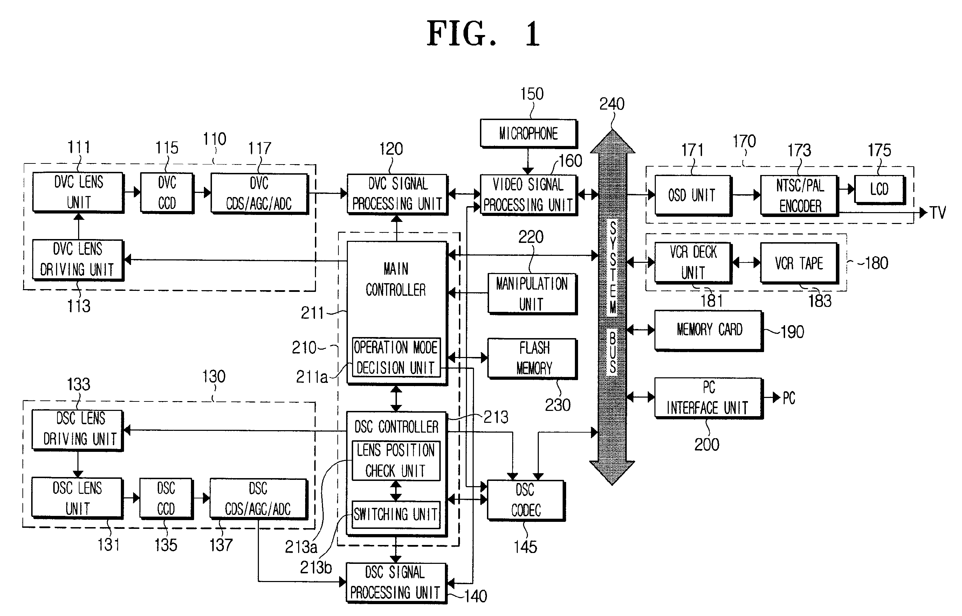

In Figure 1, the combination camera has a digital video camera (DVC) picture-taking part 110, a DVC signal processing unit 120, a digital still camera (DSC) image-capturing part 130, a DSC signal processing unit 140, a DSC encoder/decoder (CODEC) unit 145, a microphone 150, a video signal processing unit 160, a display part 170, a video cassette recorder (VCR) part 180, a memory card 190, a PC interface unit 200, a control part 210, a manipulation unit 220, a flash memory 230, and a system bus 240.

The DVC picture-taking part 110 converts an optical signal coming in through a lens into an electrical signal. The DVC picture-taking part 110 performs certain signal processing on the converted signal. The DVC picture-taking part 110 can capture both moving and still images. However, the still images captured by the DVC picture-taking part 110 have a poorer quality image compared to still images captured by the DSC image-capturing part 130, which will be described in greater detail below. Thus, the DVC picture-taking part 110 is primarily used to capture moving images.

The DVC picture-taking part 110 is provided with a DVC lens unit 111, a DVC lens driving unit 113, a DVC charge coupled device (CCD) unit 115, and a DVC correlated double sampler (CDS)/auto gain controller (AGC)/analog-to-digital converter (ADC) 117.

The DVC lens driving unit 113 is controlled by the control part 210 and drives the DVC lens unit 111. In detail, the DVC lens driving unit 113 operates the zooming of the DVC lens unit 111, automatically controls the focal point and controls the opening and closing of the iris provided in the DVC lens unit 111.

The DVC CCD unit 115 converts the optical image focused using the DVC lens unit 111 into an electrical signal. Thus, the optical image of the object to be captured is focused on the photosensitive surface of the DVC CCD unit 115 by the DVC lens unit 111, and the DVC CCD unit 115 converts the focussed optical image into an electrical signal. This electrical signal is then output in one-dimensional form by horizontal and vertical scanning.

The DVC CDS/AGC/ADC 117 removes electrical noise from a signal output from the DVC CCD unit 115 using the correlated double sampler (CDS), controls the gain using the automatic gain controller (AGC) so as to maintain a constant signal level, and converts the resultant signal into a digital signal using the analog-to-digital converter (ADC).

The DVC signal processing unit 120 performs certain signal processing steps on the signal fed from the DVC picture-taking part 110, and applies the processed signal to the video signal processing unit 160. In detail, the DVC signal processing unit 120 separates the fed signal into a luminance signal and a chrominance signal, carries out gain adjustment, outline correction, and automatic white balance (AWB), and the like. Additionally, the resolution of the captured image is changed.

The microphone 150 converts sound emanating from an exterior source into an electrical signal.

The video signal processing unit 160 feeds the signal processed in the DVC signal processing unit 120 to the display part 170. The video signal processing unit 160 operates according to a user's 'picture-taking or image-capturing command' that is input using the manipulation unit 220. The video signal processing unit 160 compresses the signal output from the DVC signal processing unit 120 into a signal having a DV format in accordance with the image-capture command.

Further, the video signal processing unit 160 converts a signal output from the microphone 150 into a digital signal, and compresses the converted signal using Pulse Code Modulation (PCM). The video signal processing unit 160 feeds the compressed signal to the VCR part 180 for recording according to the controls of the control part 210.

If the combination camera operates in the 'VCR reproducing mode', the video signal processing unit 160 has compressed video signal input from the VCR part 180 for play back according to the controls of the control part 210. Further, the video signal processing unit 160 decompresses the input video signal and feeds this to the display part 170.

The DSC image-capturing part 130 converts an optical signal coming in through the lens into an electrical signal and carries out certain signal processing on the converted signal. The DSC image-capturing part 130 can capture both moving and still images. However, the size of moving images taken by the DSC image-capturing part 130 is much larger than that for moving images taken by the DVC picture-taking part 110 because of the high quality captured images. Thus, the data for the moving images needs substantially more storage space and thus it becomes difficult to capture moving images for a long period of time. Accordingly, the DSC image-capturing part 130 is primarily used to capture still images.

The DSC image-capturing part 130 has a DSC lens unit 131, a DSC lens driving unit 133, a DSC CCD unit 135, and a DSC CDS/AGC/ADC 137.

The DSC lens driving unit 133 drives the DSC lens unit 131 according to control signals from the control part 210. In detail, the DSC lens driving unit 133 drives the zooming of the DSC lens unit 131, automatically controls the focal point and adjusts the amount of opening or closing of the iris (not shown) provided in the DSC lens unit 131. The DSC lens zooms in to capture an enlarged image of an object, and zooms out to capture a regular picture of the object. The 'DSC lens open state' refers to a combined state of the zoom-in and zoom-out of the DSC lens for capturing images of an object using the DSC image-capturing part 130 of the combination camera, and the 'DSC lens closed state' refers to the closed state of the DSC lens which prevents capture of any images of an object using the DSC part 130.

The DSC CCD unit 135 converts an optical image coming in through the DSC lens unit 131 into an electrical signal for output.

The DSC CDS/AGC/ADC 137 removes electrical noise from the signal output from the DSC CCD unit 135 by using the CDS, controls the gain in order to maintain a constant signal level using the AGC and converts the signal into a digital signal by using the ADC.

The DSC signal-processing unit 140 carries out certain signal processing steps on a signal fed in from the DSC image-capturing part 130. In detail, the DSC signal-processing unit 140 separates the input signal into a luminance (Y) signal and a chrominance (C) signal, performs gain adjustment, outline correction, AWB, and the like. The DSC signal-processing unit 140 also changes resolution of the captured image.

The DSC CODEC 145 applies the signal processed in the DSC signal-processing unit 140 to the display part 170.

If the DSC CODEC 145 receives, from the control part 210, a user's 'taking-picture command' which is input using the manipulation unit 220, the DSC CODEC 145 compresses the signal output from the DSC signal-processing unit 140 into a JPEG signal or the like. Further, the DSC CODEC 145 stores the compressed signal in the memory card 190 according to control signals from the control part 210.

If the combination camera operates in the 'memory card reproducing mode', the DSC CODEC 145 receives a compressed signal from the memory card 190 for play back according to control signals from the control part 210. Further, the DSC CODEC 145 decompresses and feeds the input compressed video signal to the display part 170.

The display part 170 displays images output from the video signal processing unit 160 and the DSC CODEC 145. To perform such a function, the display part 170 has an On Screen Display (OSD) unit 171, a National Television System Committee/Phase Alternation Line (NTSC/PAL) encoder 173, and a Liquid Crystal Display (LCD) unit 175.

The OSD unit 171 stores OSD characters, GUI data such as menu views which are necessary to build Graphic User Interface (GUI). The OSD unit 171 adds the OSD characters and/or the GUI data to an image output from the video signal processing unit 160 and the DSC CODEC 145 according to the control signals from the control part 210.

The NTSC/PAL encoder 173 converts the video signal from the OSD unit 171 into a video signal in NTSC format or PAL format, and applies the converted video signal to the LCD unit 175 or an external TV.

The LCD unit 175 is a display device for displaying images fed from the NTSC/PAL encoder 173.

The VCR part 180 records a video signal output from the video signal processing unit 160, or reads and feeds the recorded video signal to the video signal processing unit 160. The VCR part 180 has a VCR deck unit 181 and a VCR tape 183.

The VCR tape 183 is a magnetic recording medium for recording a video signal thereon, and can be inserted into or ejected from the VCR deck unit 181.

The VCR deck unit 181 records a video signal from the video signal processing unit 160 on the VCR tape 183, or reads and feeds a video signal stored on the VCR tape 183 to the video signal processing unit 160.

The memory card 190 is a recording medium for recording a video signal of the DSC CODEC 145 therein, and can be inserted into and removed from the combination camera.

The PC interface unit 200 interfaces with an external personal computer (PC) or a printer (not shown).

The control part 210 controls the overall operation of the combination camera depending on a user's input command. These commands are provided by the manipulation unit 220. In particular, the control part 210 controls either of the DVC picture-taking part 110 and the DSC image-capturing part 130 so that images are captured depending on a user's preference. The control part 210 has a main controller 211 and a DSC controller 213.

The main controller 211 has input thereto commands from the manipulation unit 220. Accordingly, the main controller 211 controls the operations of the DVC lens driving unit 113, the DVC signal processing unit 120, video signal processing unit 160, OSD unit 171, VCR deck unit 181, and PC interface unit 200. Further, the main controller 211 controls the operations of the DSC controller 213. Also, the main controller 211 includes an operation mode decision unit 211A for deciding which operation mode is being used for the DVC picture-taking part 110 or the DSC image-capturing part 130 when electric power is applied to the combination camera. When the power is applied, the operation mode decision unit 211A decides whether the combination camera is in the DVC image capture mode or the DSC image-capture mode.

The DSC controller 213 controls the operations of the DSC lens driving unit 133, DSC signal-processing unit 140, and DSC CODEC 145 according to control signals from the main controller 211. The DSC controller 213 has a lens position check unit 213A and a switching unit 213B.

When power is applied to the combination camera, the lens position check unit 213A checks the position of the DSC lens. In other words, if the power is applied to the combination camera, the lens position check unit 213A checks whether the DSC lens is zoomed in or out. If the DSC lens is determined to be zoomed in, the lens position check unit 213A decides that the DSC lens is open. If the DSC lens is determined to be zoomed out, the lens position check unit 213A checks whether the DSC lens is open or closed using the DSC lens unit 131. The opening or closing of the DSC lens is determined by the opening or closing of the iris of the DSC lens unit 131.

If the lens position check unit 213A decides that the DSC lens is open, the switching unit 213B switches the DSC lens to the closed state. If the operation mode decision unit 211A decides that the combination camera is in the DVC picture-taking mode, the switching unit 213B switches the DSC lens to the closed state. At this time, if the combination camera is used in the DSC image-capture mode, the DSC lens unit 131 causes the DSC lens to zoom out. Therefore, it is preferable that the switching unit 213B switches the DSC lens to zoom out and then to close using the DSC lens driving unit 133. Further, if the lens position check unit 213A determines that the DSC lens is zoomed out, it is preferable that the switching unit 213B switches the DSC lens to the closed state, keeping the DSC lens zoomed out.

The flash memory 230 stores system programs, such as the booting program needed by the main controller 211, which are necessary to operate the camera. The flash memory 230 stores other data and application programs which have to be maintained even during power failure.

The manipulation unit 220 is a user interface unit allowing a user to input commands related to function selection and operation control of the combination camera.

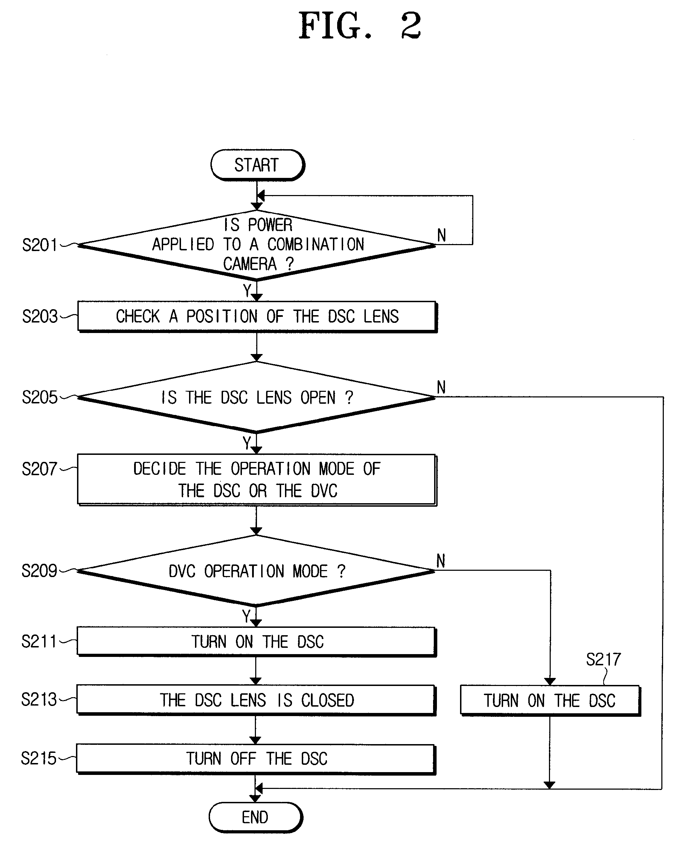

A description will now be made in detail of the DSC lens control method for the combination camera of Figure 1 with reference to Figure 2.

If the power is applied to the combination camera at step (S201), the lens position check unit 213A of the DSC controller 213 checks the position of the DSC lens using the DSC lens unit 131 or the DSC lens driving unit 133. This is done at step (S203). The lens position check unit 213A decides whether the DSC lens has been zoomed out or in. If the DSC lens has been zoomed in, the lens position check unit 213A decides that the DSC lens is open. If the DSC lens has been zoomed out, the lens position check unit 213A decides whether the iris of the DSC lens is open or closed using the DSC lens unit 131 to thereby establish whether the DSC lens is open or closed.

If the lens position check unit 213A determines that the DSC lens is open at step (S205), the operation mode decision unit 211A decides whether the operation mode of the combination camera is in the DVC picture-taking mode or in the DSC image-capturing mode at step (S207). In the flow chart of Figure 2, if the lens position check unit 213A decides that the DSC lens is open, the operation mode decision unit 211A decides the operation mode of the combination camera at step (S207). However, the lens position check unit 213A can also be configured to check the position of the DSC lens after the operation mode decision unit 211A has decided the operation mode of the combination camera.

If the operation mode decision unit 211A decides that the combination camera is in DVC picture-taking mode at step (S209), the switching unit 213B of the DSC controller 213 applies the power to the DSC image-capturing part 130 at step (S211). The DSC lens driving unit 133 is controlled so as to close the DSC lens in step (S213). Further, after the DSC lens is closed, the switching unit 213B turns off the power to the DSC image-capturing part 130 to conserve the power of the combination camera at step (S215).

If the DSC lens is open and the operation mode decision unit 211A decides that the operation mode of the combination camera is not that of the DVC picture-capturing mode, or in other words, is in DSC picture-capturing mode, the operation mode decision unit 211A ensures that the power is applied to the DSC image-capturing part 130 so that the DSC image-capturing part 130 can proceed with capturing images at step (S217).

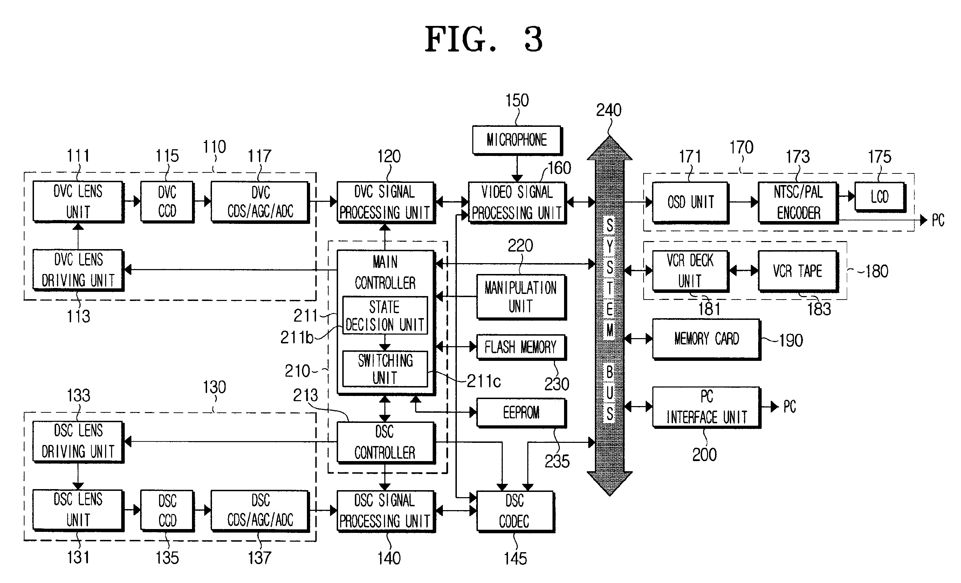

In Figure 3, the combination camera has the DVC picture-taking part 110, DVC signal processing unit 120, DSC image-capturing part 130, DSC signal-processing unit 140, DSC CODEC 145, microphone 150, video signal processing unit 160, display part 170, VCR part 180, memory card 190, PC interface unit 200, control part 210, manipulation unit 220, flash memory 230, EEPROM 235, and system bus 240.

The main controller 211 has a state decision unit 211b and a switching unit 211c. The state decision unit 211b communicates with the EEPROM 235 when the power is applied while in the DVC operation mode, and decides whether the DSC lens is open or closed according to information stored on the EEPROM 235.

If the state decision unit 211b decides that the DSC lens is open, the switching unit 211c switches the DSC lens to the closed state.

If the combination camera is operating in the DSC image-capturing mode, the EEPROM 235 stores information relating to the open or closed state of the DSC lens and the zoom-in or zoom-out state of the DSC lens. In other words, if, while in the DSC image-capturing mode, a user zooms the DSC lens in or out or switches the operation mode of the combination camera to the DVC image capture mode, the EEPROM 235 stores the zoom-in or zoom-out state and the open or closed state of the DSC lens.

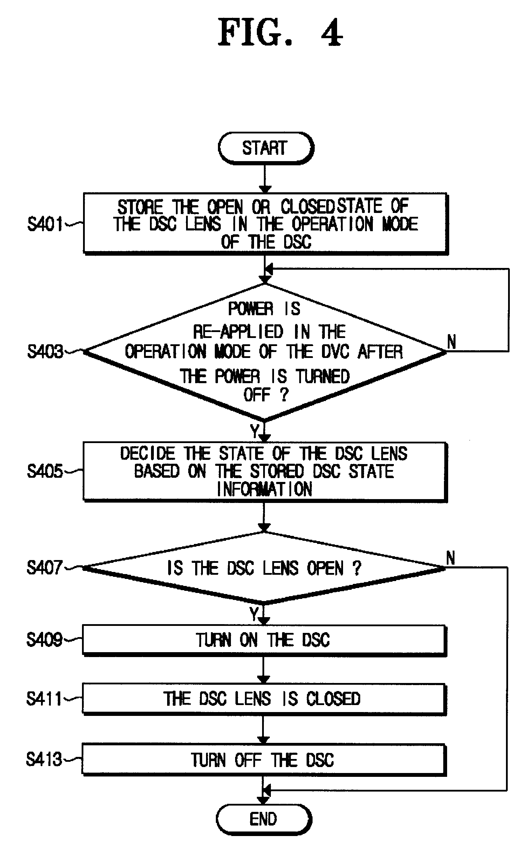

Referring to Figure 4, if the DSC lens is switched from the zoom-in state to the zoom-out state while in the DSC image-capturing mode, or if the mode of the combination camera is switched from the DSC image-capturing mode to the DVC picture-taking mode, the main controller 211 stores the zoom-in or the zoom-out state and the open or closed state of the DSC lens into the EEPROM 235 at step (S401). If the DSC lens is zoomed in, the main controller 211 determines that the DSC lens is open. If the DSC lens is zoomed out, the main controller 211 determines whether the DSC lens is open or closed using the DSC lens unit 131.

If the combination camera is turned off and then turned on whilst in the DVC picture-capturing mode in step (S403), the state decision unit 211b determines the current state of the DSC lens based on the state information of the DSC lens stored in the EEPROM 235 at step (S405). In other words, if the zoom-in state is stored for the DSC lens before the combination camera is turned off, the state decision unit 211b decides that the current state of the DSC lens is open. Further, if the DSC lens is zoomed out before the combination camera is turned off and the EEPROM 235 stores information indicating that the DSC lens is, the state decision unit 211b determines that the DSC lens is closed.

If the state decision unit 211b decides that the DSC lens is open at step (S407), the switching unit 211c applies power to the DSC image-capturing part 130 at step (S409) so as to close the DSC lens at step (S411), and, after the DSC lens is closed, then turns off the DSC image-capturing part 130 at step (S413).

Thus, according to embodiments of the present invention, if the power is applied in the DVC mode after the combination camera is turned off when the DSC lens has been open, the combination camera can efficiently close the DSC lens. Accordingly, the present invention can be used to reduce a user's inconvenience at using the DVC picture-taking mode during the open state of the DSC lens, or the inconvenience of switching the mode to the DSC image-capturing mode to close the DSC lens and then switching the mode to the DVC picture-capturing mode for use.

## Claims

1. A camera apparatus having a still camera image capture unit (130) and a camcorder image capture unit (110), **characterised by** means for blocking the light path to the light sensor (135) in the still camera image capture unit (130) when the still image capture unit (130) is non-operational.

2. A camera apparatus according to claim 1, wherein the blocking means reduces the aperture of the lens (131) substantially to zero.

3. A camera apparatus according to either one of claims 1 or 2, comprising control means (210) configured to check the position of the blocking means when power is applied to the camera apparatus.

4. A combination camera combining both a digital still camera (DSC) and a digital video camera (DVC), comprising:
a lens position check unit for checking a position of a DSC lens if electric power is applied; and
a switching unit for switching the DSC lens to a closed state if the lens position check unit decides that the DSC lens is open.

5. The combination camera as claimed in claim 4, further comprising:
an operation mode decision unit for deciding if an operation mode comprises that of the DSC or the DVC, wherein the switching unit switches the DSC lens to the closed state if the operation mode decision unit decides that the operation mode comprises that of the DVC.

6. The combination camera as claimed in claim 5, wherein the switching unit turns off the electric power to the DSC and the DSC lens if the operation mode decision unit decides that the operation mode comprises that of the DVC.

7. A DSC lens control method for a combination camera combining both a digital still camera (DSC) and a digital video camera (DVC), comprising the steps of:
(a) checking a position of a DSC lens if electric power is applied to the combination camera; and
(b) switching the DSC lens to a closed state if the DSC lens is decided to be open.

8. The DSC lens control method as claimed in claim 7, further comprising the step of:
(c) deciding if an operation mode comprises that of the DSC or the DVC, wherein the step (b) further comprises the step of switching the DSC lens to the closed state if the step (c) decides that the operation mode comprises that of the DVC.

9. The DSC lens control method as claimed in claim 8, further comprising the step of:
(d) turning off the electric power applied to the DSC and the DSC lens if the step (c) decides that the operation mode comprises that of the DVC.

10. A combination camera combining both a digital still camera (DSC) and a digital video camera (DVC), comprising:
a storage unit for storing an open or a closed state of a DSC lens while in an operation mode comprising that of the DSC;
a state decision unit for deciding the state of the DSC lens through the storage unit if electric power is applied while in an operation mode comprising that of the DVC; and
a switching unit for switching the DSC lens to a closed state if the state decision unit decides that the DSC lens is open.

11. The combination camera as claimed in claim 10, wherein the storage unit comprises an electrically erasable and programmable ROM (EEPROM).

12. The combination camera as claimed in claim 11, wherein the switching unit is configured to switch the DSC lens to the closed state by applying the electric power to the DSC.

13. A DSC lens control method for a combination camera combining both a digital still camera (DSC) and a digital video camera (DVC), comprising the steps of:
(a) storing an open or a closed state of a DSC lens while in an operation mode comprising that of the DSC of the combination camera;
(b) deciding the state of the DSC lens based on information stored in the step (a) if electric power is applied while in an operation mode comprising that of the DVC; and
(c) switching the DSC lens to the closed state if the step (b) decides that the DSC lens is open.

14. The DSC lens control method as claimed in claim 13, wherein the step (a) further comprises the step of storing the open or closed state of the DSC lens in an EEPROM.

15. The DSC lens control method as claimed in claim 14, wherein the step (c) further comprises the step of switching the DSC lens to the closed state by applying the electric power to the DSC.
